# EUROPEAN PATENT APPLICATION

(11) **EP 4 542 757 A1**
(43) Date of publication of application: **23.04.2025**
(21) Application number: 24193362.1
(22) Date of filing: 07.08.2024
(51) Int. Cl.: H01M 50/533, H01M 50/538, H01M 50/553

(54) **SECONDARY BATTERY**

(30) Priority: 18.10.2023 JP 2023179713
(71) Applicant: Prime Planet Energy & Solutions, Inc., Chuo-ku, Tokyo 103-0022 (JP)
(72) Inventor: SHIKATA, Katsuya, Tokyo 103-0022 (JP)
(74) Representative: Kuhnen & Wacker Patent- und Rechtsanwaltsbüro PartG mbB

(57) **Abstract**

A secondary battery (10) includes a case body (11), a sealing member (12) closing the case body (11), an electrode body (2) housed in the case body (11) and constituted of positive and negative electrode bodies (21, 22) stacked with separators (23) interposed therebetween, and positive and negative collector terminals (4) each including a base portion (41) located in end portions of the sealing member (12) and connected thereto via an insulating member (3), a base adjoining portion (42) adjacent to the base portion (41), separated from or separably in contact with the insulating member (3), and a lead portion (43) with a lead upper end portion (43a) connected to the base adjoining portion (42) and a lead lower end portion (43b) bonded to the electrode body (2). The base adjoining portion (42) or the lead upper end portion (43a) includes an easily-deformable portion (44) that can be deformed without melting with respect to the base portion (41) to allow displacement of the lead lower end portion (43b) in the long-side direction of the sealing member (12).

## Description

### BACKGROUND

### Technical field

The disclosure relates to a secondary battery to be used in hybrid vehicles, electric vehicles, and others.

### Related Art

Conventionally, some secondary batteries to be used in hybrid vehicles, electric vehicles, and others are provided with a current cutoff mechanism to prevent an excessive temperature rise due to over-charge or over-discharge, for example. For instance, Patent Document 1 discloses a secondary battery provided with a fuse mechanism as the current cutoff mechanism, in which a current-collector terminal bonded to an electrode body is provided with a reduced cross-section portion near a portion joined to a sealing member, and the reduced cross-section portion will melt when the battery temperature rises due to excessive current. However, in the above-described current cutoff mechanism, the reduced cross-section portion of the current-collector terminal melts due to a temperature rise, and thus the relevant secondary battery could not be reused unless the current-collector terminal is replaced, for example.

Meanwhile, for example, Patent Document 2 discloses a mounting structure for a temperature sensor that monitors excessive temperature rise of a battery cell by contact with the top surface of the battery cell, that is, the top surface of a sealing member. With this temperature sensor mounted in place, it is possible to prevent the excessive temperature rise of the battery cell, and protect the battery cell while avoiding the current-collector terminal from melting.

### Patent Documents

Patent Document 1: US 2013/0004831 A1
Patent Document 2: Japanese unexamined patent application publication No. 2009-176601 (JP 2009-176601A)

### SUMMARY

### Technical Problems

In the above-described conventional configurations, however, when bonding an end portion of an electrode body (i.e., a portion not coated with active material) and the current-collector terminal, for example, external force would be applied to the current-collector terminal, causing deformation of this terminal. Due to this deformation of the current-collector terminal, the sealing member to which the current-collector terminals are connected to both end portions of the sealing member in the long-side direction (also referred to as long-side-direction end portions) may cause warpage deformation, in which the central part of the sealing member is displaced in the top-bottom direction.

In this regard, it is possible to reduce the deformation of the current-collector terminal against the external force by enhancing the rigidity of the current-collector terminal. However, even if the rigidity of the current-collector terminal is increased, the rigidity of the sealing member is generally lower than the rigidity of the current-collector terminal. Thus, the external force acting on each current-collector terminal is transmitted substantially directly to the sealing member to which the current-collector terminals are joined, so that warpage deformation of the sealing member is not sufficiently suppressed.

The present disclosure has been made to address the above problems and has a purpose to provide a secondary battery that is configured such that a current-collector terminal internally absorbs the external force acting thereon without melting, and can suppress warpage deformation of a sealing member to which the current-collector terminal is connected.

### Means of Solving the Problems

(1) To achieve the above-mentioned purpose, one aspect of the present disclosure provides a secondary battery comprising: a case body having an opening portion; a sealing member closing the opening portion and having a longer length in a long-side direction than a length in a short-side direction perpendicular to the long-side direction; an electrode body housed in the case body and constituted of a positive electrode body and a negative electrode body stacked with a separator interposed between them; and a current collector terminal for positive electrode and a current collector terminal for negative electrode, each of the current collector terminals including: a base portion joined to one of end portions of the sealing member located at both ends in a long-side direction via an insulating member; a base adjoining portion adjacently connected with the base portion and located separately from the insulating member or separably in contact with the insulating member; and a lead portion including a lead upper end portion connected with the base adjoining portion and a lead lower end portion bonded to the electrode body, wherein either the base adjoining portion or the lead upper end portion may be provided with an easily-deformable portion formed to be deformable with respect to the base portion without melting, to allow the lead lower end portion to be displaced in the long-side direction of the sealing member.
(2) In the secondary battery described in (1), the sealing member may have a top surface including a sensor contact surface with which a temperature sensor can contact to monitor a temperature of the secondary battery, and the easily-deformable portion may be formed to be deformed in the long-side direction of the sealing member so that a displacement amount of a central part of the sealing member that is displaced in a top-bottom direction when external force acts on the lead lower end portion in the long-side direction of the sealing member falls within a predetermined reference value.
(3) In the secondary battery described in (1), the easily-deformable portion may be a thinned portion formed in the base adjoining portion at an eccentric position in a plate thickness direction of the sealing member, the thinned portion extending in a short-side direction of the sealing member with a predetermined cross-section.
(4) In the secondary battery described in (1), the easily-deformable portion may be a curved portion formed in the base adjoining portion and extending in a short-side direction of the sealing member with a predetermined cross-section.
(5) In the secondary battery described in (1), the easily-deformable portion may be a reduced-width portion formed by a cutout in the base adjoining portion in a short-side direction of the sealing member from an end in a width direction, the base adjoining portion being located at a position separated from the insulating member.
(6) In the secondary battery described in any one of (1) to (4), the lead upper end portion may be provided with a second easily-deformable portion that is one of a thinned portion, a curved portion, each extending in the long-side direction of the sealing member with a predetermined cross-section, or a reduced-width portion formed by a cutout in the lead upper end portion in the long-side direction of the sealing member from an end in a width direction.
(7) In the secondary battery described in (1), the easily-deformable portion may be a reduced-width portion formed in the lead upper end portion in the long-side direction of the sealing member from an end in a width direction.
(8) In the secondary battery described in (1), the easily-deformable portion may be a constricted portion formed in the lead upper end portion in the long-side direction and a short-side direction of the sealing member.

### BRIEF DESCRIPTION OF THE DRAWINGS

FIG. 1 is a schematic cross-sectional view of a secondary battery in one aspect of an embodiment;
FIG. 2 is a schematic block diagram of a temperature monitoring system for a battery pack of the secondary battery shown in FIG. 1;
FIG. 3 is a schematic perspective view showing a state where a positive electrode body and a negative electrode body of an electrode body shown in FIG. 1 are in the course of being wound with separators interposed therebetween;
FIG. 4 is a cross-sectional view taken along a line A-A in FIG. 1;
FIG. 5A is an enlarged cross-sectional view of a first example of a part B of a secondary battery in FIG. 1;
FIG. 5B is an enlarged cross-sectional view of a modified example of FIG. 5A;
FIG. 5C is a side view seen from an arrow D1 in FIG. 5A;
FIG. 5D is a bottom view seen from an arrow E1 in FIG. 5A;
FIG. 6A is an enlarged cross-sectional view of a second example of the part B of the secondary battery in FIG. 1;
FIG. 6B is an enlarged cross-sectional view of a modified example of FIG. 6A;
FIG. 6C is a side view seen from an arrow D2 in FIG. 6A;
FIG. 6D is a bottom view seen from an arrow E2 in FIG. 6A;
FIG. 7A is an enlarged cross-sectional view of a third example of the part B of the secondary battery in FIG. 1;
FIG. 7B is an enlarged cross-sectional view of a modified example of FIG. 7A;
FIG. 7C is a side view seen from an arrow D3 in FIG. 7A;
FIG. 7D is a bottom view seen from an arrow E3 in FIG. 7A;
FIG. 8A is an enlarged cross-sectional view of a fourth example of the part B of the secondary battery in FIG. 1;
FIG. 8B is a side view seen from an arrow D4 in FIG. 8A;
FIG. 9A is an enlarged cross-sectional view of a fifth example of the part B of the secondary battery in FIG. 1;
FIG. 9B is a side view seen from an arrow D5 in FIG. 9A; and
FIG. 9C is an enlarged perspective view of the fifth example of the part B of the secondary battery in FIG. 1.

### DETAILED DESCRIPTION OF THE EXEMPLARY EMBODIMENTS

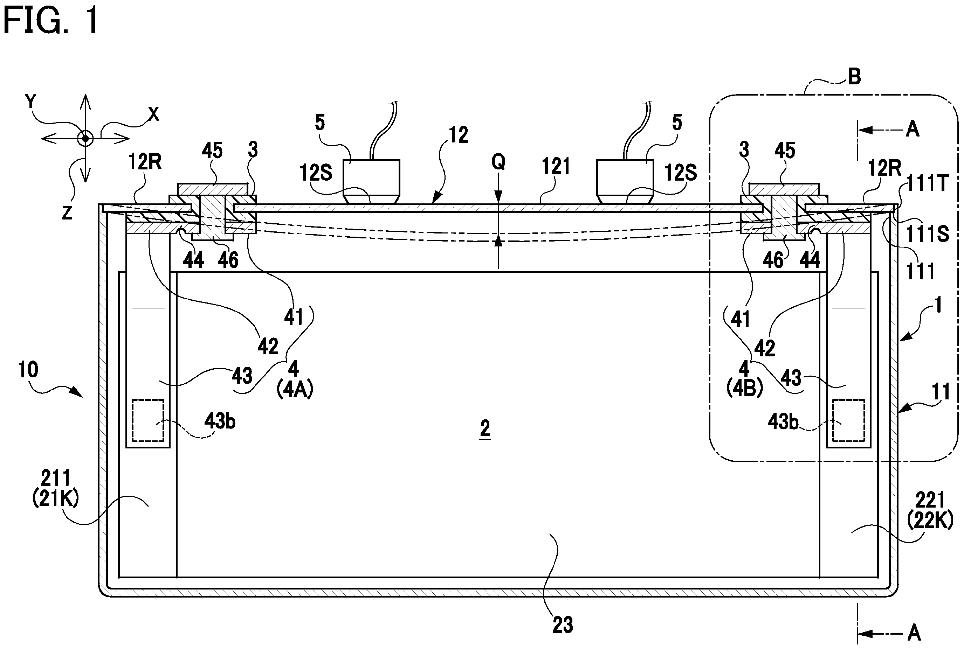

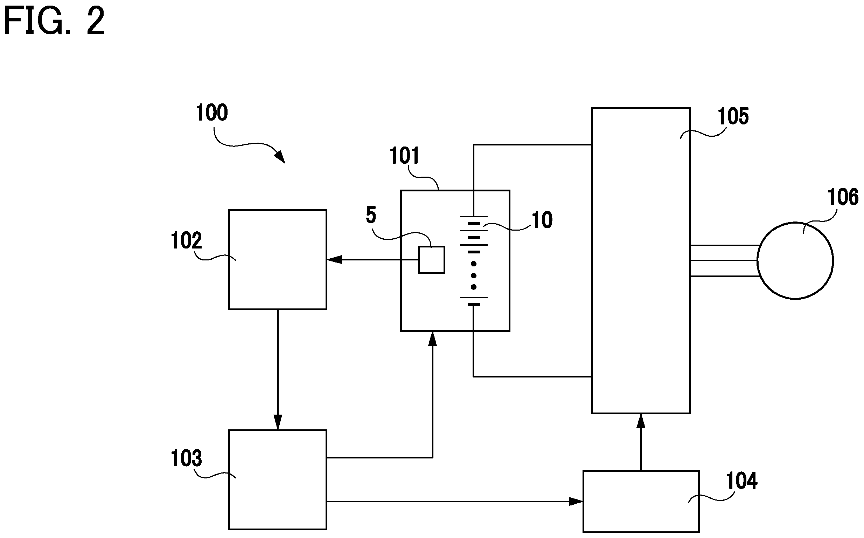

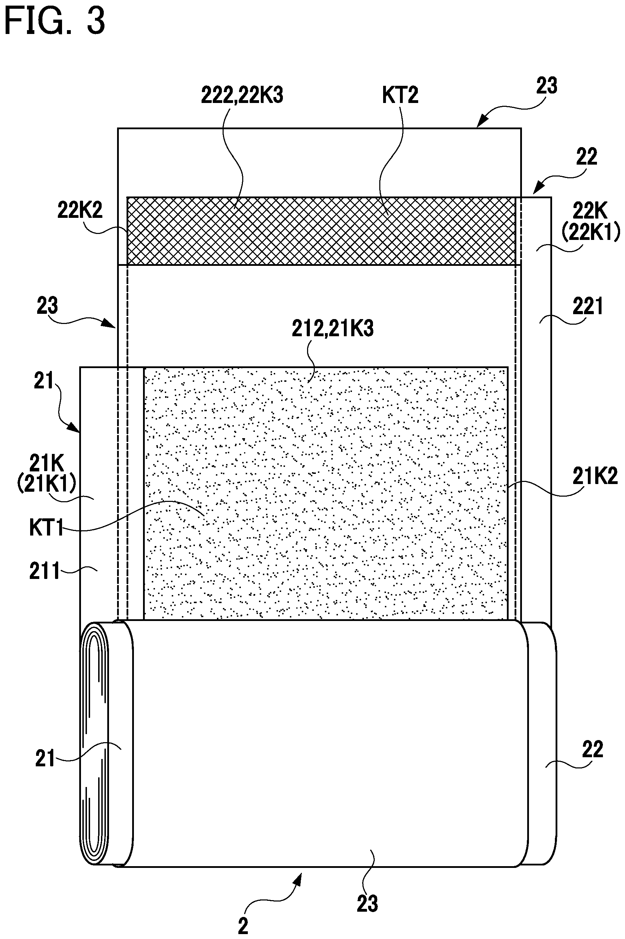

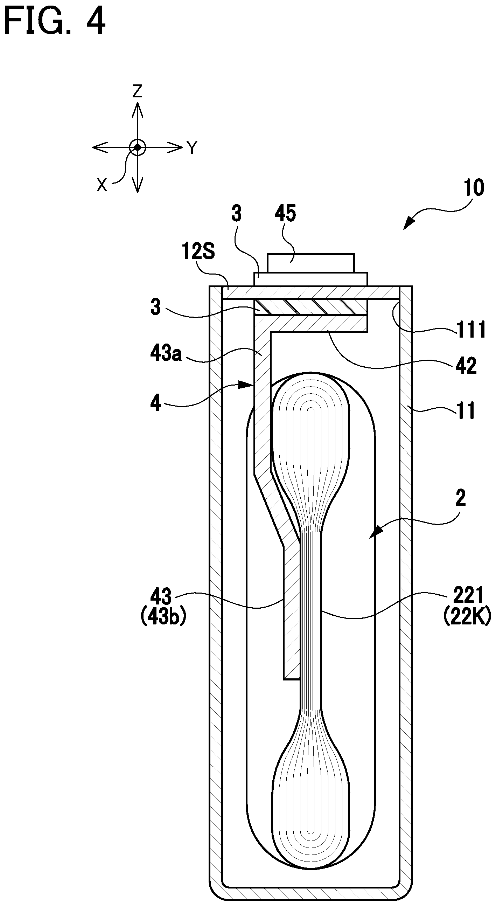

An overall structure of a secondary battery in an embodiment of this disclosure will now be given referring to the accompanying drawings. FIG. 1 is a schematic cross-sectional view of a secondary battery in one aspect of the embodiment. FIG. 2 is a schematic block diagram of a temperature monitoring system for a battery pack of the secondary battery shown in FIG. 1. FIG. 3 is a schematic perspective view showing a state where a positive electrode body and a negative electrode body of an electrode body shown in FIG. 1 are in the course of being wound with separators interposed therebetween. FIG. 4 is a cross-sectional view taken along a line A-A in FIG. 1. In each drawing, the direction X indicates the long-side direction of a sealing member, the direction Y indicates the short-side direction of the same, and the direction Z indicates the top-bottom direction of a case. In some cases, this direction Z also indicates a plate thickness direction of a base adjoining portion.

A secondary battery 10 in this embodiment of the disclosure includes a case 1, an electrode body 2, and current collector terminals 4 (hereinafter, also referred to as collector terminals 4), as shown in FIG. 1 to FIG. 4. In this embodiment, the case 1 includes a case body 11 having a bottomed rectangular prismatic shape with a rectangular opening portion 111, and a sealing member 12 having a long, flat platelike shape which has a longer length in a long-side direction than a length in a short-side direction perpendicular to the long-side direction and closes the opening portion 111. The case body 11 and the sealing member 12 are each made of aluminum. The sealing member 12, which is a lid member of the secondary battery 10 in this embodiment, is required to enhance the opening performance of a safety valve not shown and thus is made of especially a material that is softer and more deformable than the current collector terminals 4.

The opening portion 111 of the case body 11 is formed with a thinned portion 111T in only the inner wall on each short side. Therefore, end portions 12R of the sealing member 12 on both end sides in the long-side direction, i.e., the X-direction, are supported on shoulders 111S formed at lower ends of the thinned portions 111T. However, the opening portion 111 of the case body 11 has no thinned portions in the inner wall on each long side and thus cannot stop a central part of the sealing member 12 from causing displacement, e.g., warpage deformation, in the top-bottom direction, i.e., the Z-direction.

Further, on an upper surface 121 of the sealing member 12, a sensor contact surface 12S is provided to allow contact with a temperature sensor 5 for monitoring the battery temperature of the secondary battery 10. The temperature sensor 5 is connected to for example a control system 100 shown in FIG. 2. This control system 100 is provided with a battery pack 101 including the temperature sensor 5, a temperature monitoring unit 102, a battery control unit 103, a vehicle control unit 104, and a power control unit 105 connected to a power motor 106.

The battery pack 101 includes a plurality of secondary batteries (battery cells) 10 connected to each other, and the temperature sensor 5 for measuring the temperature of at least one or more of the secondary batteries 10 included in the battery pack 101. The battery pack 101 supplies a requested electric power to the power motor 106 via the power control unit 105. The temperature sensor 5 is connected to the temperature monitoring unit 102. This temperature sensor 5 may be for example a thermistor, a thermocouple, or the like.

The temperature monitoring unit 102 sends an alarm signal to the battery control unit 103 when the battery temperature measured by the temperature sensor 5 exceeds a predetermined control temperature (e.g., 60°C to 80°C) set lower than a battery upper limit temperature of each secondary battery 10 (e.g., 100°C to 120°C). Upon receipt of the alarm signal, the battery control unit 103 transmits a current reducing command or a current cutoff command to the battery pack 101. Further, upon receipt of an abnormal signal representing that the battery temperature is abnormal from the battery control unit 103, the vehicle control unit 104 controls the power motor 106 via the power control unit 105. Thus, the secondary battery 10 in this embodiment is protected from an excessive rise of the battery temperature more than the predetermined battery upper limit temperature. The secondary battery 10 in this embodiment therefore does not need to be internally provided with the fuse mechanism as disclosed in Patent Document 1. The battery upper limit temperature is generally set lower than the heat-resistance temperature of the electrode body 2, for example, than the heat-resistance temperature of the separator 23.

Further, the electrode body 2 is constituted of a positive electrode body 21 and a negative electrode body 22, which are stacked with separators 23 interposed therebetween, and is housed in the case 1. The positive electrode body 21 includes an active-material uncoated part 211 in which one end portion 21K1 of an electrode foil 21K (i.e., the left end area in FIG. 2) is not coated with active material KT1 and an active-material coated part 212 in which the electrode foil 21K is coated with active material KT1. Similarly, the negative electrode body 22 includes an active-material uncoated part 221 in which one end portion 22K1 of an electrode foil 22K (i.e., the right end area in FIG. 2) is not coated with active material KT2 and an active-material coated part 222 in which the electrode foil 22K is coated with active material KT2. The active-material uncoated part 211 of the positive electrode body 21 and the active-material uncoated part 221 of the negative electrode body 22 are located opposite each other in the long-side direction of the sealing member 12, i.e., the X-direction. The active-material coated part 212 is formed over the other end portion 21K2 and a middle portion 21K3 of the electrode foil 21K. The active-material coated part 222 is formed over the other end portion 22K2 and a middle portion 22K3 of the electrode foil 22K.

For example, in a lithium ion secondary battery, the electrode foil 21K of the positive electrode body 21 may be for example an aluminum foil, and carry thereon the active material KT1 made of e.g. lithium transition metal oxide (LiNi_{1/3}Co_{1/3}Mn_{1/3}O₂, LiNiO₂, etc.). Further, the electrode foil 22K of the negative electrode body 22 may be for example a copper foil, and carry thereon the active material KT2 made of e.g. black carbon, hard carbon, soft carbon, etc. The separator 23 may be a porous sheet, made of e.g. polypropylene, polyethylene, etc. The electrolyte contained in the secondary battery 10 may be a well-known non-aqueous electrolyte.

Of the current collector terminals 4, a current collector terminal 4A for positive electrode (hereinafter, also referred to as a positive collector terminal 4A) is made of e.g. aluminum and a current collector terminal 4B for negative electrode (hereinafter, also referred to as a negative collector terminal 4B) is made of e.g. copper. In general, the tensile strength of the positive collector terminal 4A made of aluminum is smaller than the tensile strength of the negative collector terminal 4B made of copper. The electric conductivity of the positive collector terminal 4A is lower than the electric conductivity of the negative collector terminal 4B. For this reason, the plate thickness of the positive collector terminal 4A is set larger than the plate thickness of the negative collector terminal 4B in order to uniformize the strength and the allowable current amount of the positive and negative collector terminals 4A and 4B. Each of the positive and negative collector terminals 4 (4A, 4B) includes a base portion 41, a base adjoining portion 42, and a lead portion 43, which are integrally formed.

The base portion 41 is connected to the back surface of an end portion 12R of the sealing member 12 at each end in the long-side direction, i.e., the X-direction, via an insulating member 3. The base adjoining portion 42 is adjacently connected with the base portion 41, and located separately from or separably in contact with the insulating member 3. The lead portion 43 includes a lead upper end portion 43a connected with the base adjoining portion 42 and located on the upper side of the case 1, which is bent from the base adjoining portion 42 in a downward direction of the case 1, i.e., the Z-direction, and a lead lower end portion 43b on the lower side of the case 1. The lead lower end portion 43b of the positive collector terminal 4A is bonded by welding to the active-material uncoated part 211 of the electrode body 2, in which uncoated portions of the electrode foil 21K are in an overlapped, or pressed, state, that is, a collected foil state. Similarly, the lead lower end portion 43b of the negative collector terminal 4B is bonded by welding to the active-material uncoated part 221 of the electrode body 2, in which uncoated portions of the electrode foil 22K are in an overlapped, or pressed, state, that is, a collected foil state. During welding bonding of the electrode body 2 and the lead lower end portion 43b of each of the collector terminals 4A and 4B, the external force is apt to occur, causing the lead lower end portion 43b to slide on the uncoated portions of the electrode foil 21K (22K) that are in the process of being collected together, and to be displaced in the long-side direction of the sealing member 12, i.e., the X-direction.

The base portion 41 is connected to an external connection part 45 located on the top surface of the sealing member 12 with a swaged pin 46 or the like, for example. The insulating member 3 serving as a seal material is also interposed between the swaged pin 46 and the sealing member 12 and also between the external connection part 45 and the sealing member 12. The insulating member 3 may be made of for example polyphenylene sulfide (PPS). The external connection part 45 is connected to a busbar (not shown) for connection of two or more secondary batteries 10.

The base adjoining portion 42 or the lead upper end portion 43a of each collector terminal 4 is provided with an easily-deformable portion 44 formed to be deformed without melting with respect to the base portion 41, allowing displacement of the lead lower end portion 43b in the long-side direction of the sealing member 12. In other word, the easily-deformable portion 44 is deformable in the long-side direction of the sealing member 12, i.e., the X-direction, so that the displacement amount Q of the central part of the sealing member 12 in the top-bottom direction, i.e., the Z-direction, falls within a predetermined reference value, with respect to the external force acting on the lead lower end portion 43b in the long-side direction of the sealing member 12, i.e., the X-direction. The predetermined reference value is for example about 10% to 20% of the plate thickness of the sealing member 12 or about 0.2 mm to 0.25 mm. The easily-deformable portion 44 has a shape that does not melt when the battery temperature measured by the temperature sensor 5 is equal to or less than a predetermined upper-limit battery temperature.

During welding of the electrode body 2 and the lead lower end portion 43b, for example, when the lead lower end portion 43b is subjected to the external force that displaces this portion 43b in the long-side direction of the sealing member 12, i.e., the X-direction, the easily-deformable portion 44 is preferentially deformed, absorbing the external force and reducing displacement of the base portion 41 of the collector terminal 4. This can effectively suppress warpage deformation of the sealing member 12, in which the central part of the sealing member 12 in the long-side direction is displaced in the top-bottom direction, i.e., the Z-direction, while the base portions 41 are each joined to one of the end portions 12R of the sealing member 12, located at both ends in the long-side direction.

Consequently, the temperature sensor 5 can accurately contact the sensor contact surface 12S formed on the upper surface 121 of the sealing member 12, and therefore can improve its measurement accuracy. Based on the temperature accurately measured by the temperature sensor 5, the secondary battery 10 can be protected against over-charge or over-discharge without damaging the electrode body 2, the collector terminals 4, and others.

### First Example

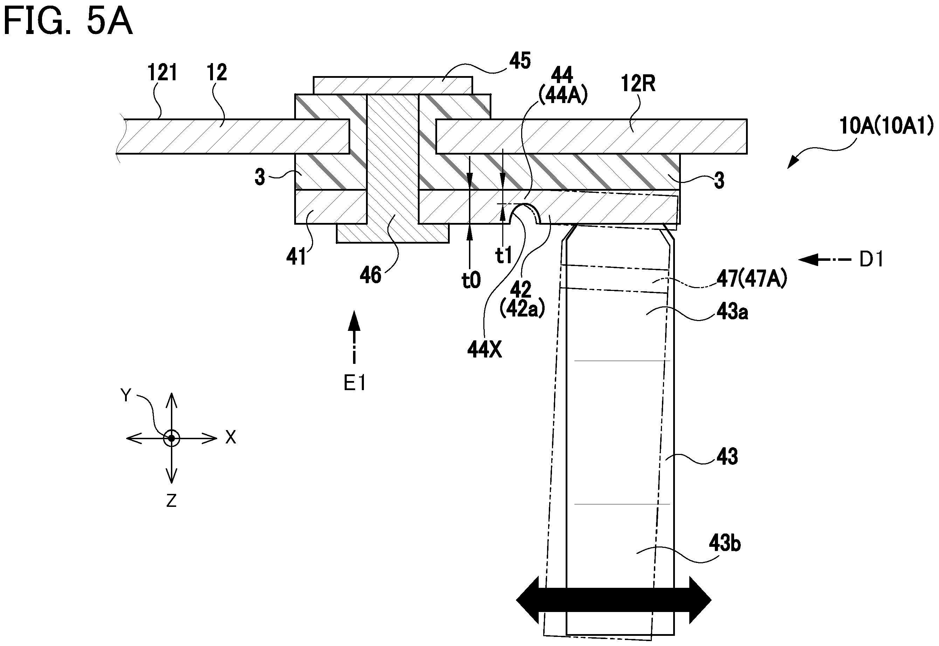

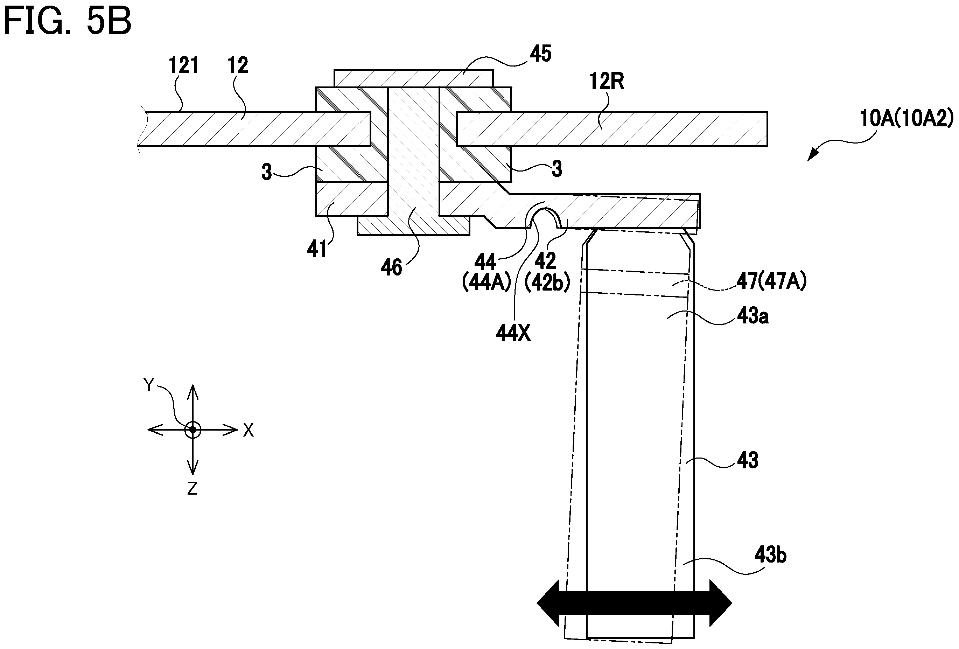

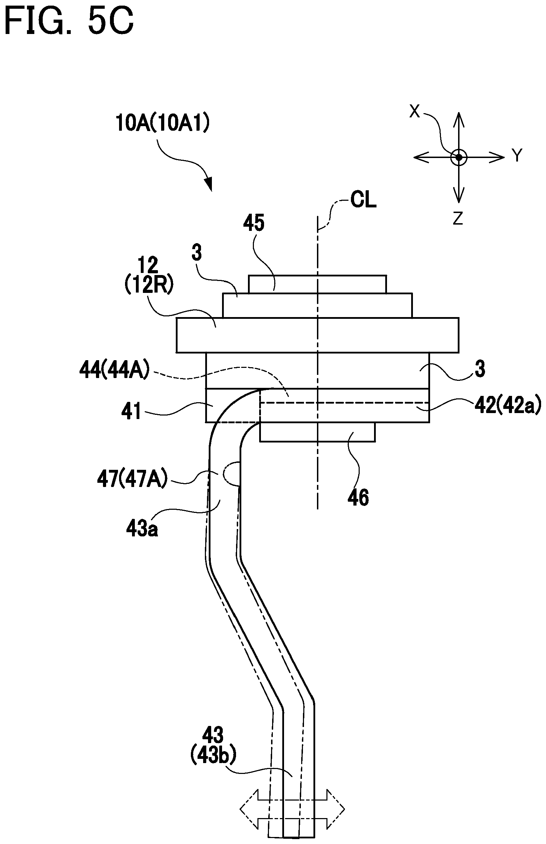

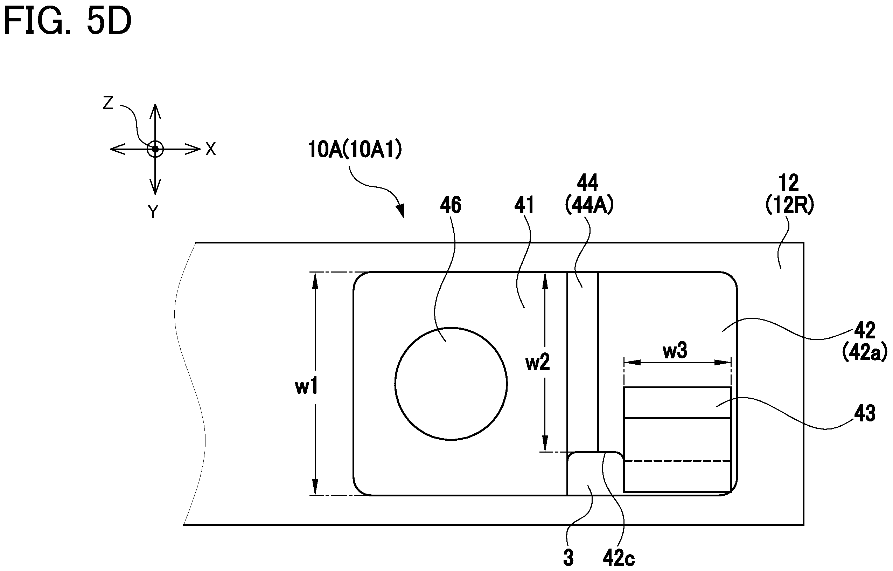

A first example of the secondary battery in the present embodiment of the disclosure will be described in detail below, referring to accompanying drawings. FIG. 5A is an enlarged cross-sectional view of a first example of a part B of the secondary battery shown in FIG. 1. FIG. 5B is an enlarged cross-sectional view of a modified example of FIG. 5A. FIG. 5C is a side view seen from an arrow D1 in FIG. 5A. FIG. 5D is a bottom view seen from an arrow E1 in FIG. 5A.

In a secondary battery 10A in the first example, the easily-deformable portion 44 is a thinned portion 44A, as shown in FIG. 5A to FIG. 5D, formed in the base adjoining portion 42. This thinned portion 44A extends with a predetermined cross-section in the short-side direction of the sealing member 12, i.e., in the Y-direction, and is located at an eccentric position in the plate thickness direction, i.e., the Z-direction. The thinned portion 44A is formed on one flat surface side (which is the upper surface side in this example) of the flat plate-shaped base adjoining portion 42 by a U-shaped cross-sectional groove 44X formed on the other flat surface side (which is the lower surface in this example). However, the configuration of the thinned portion 44A is not limited thereto. In an alternative, the thinned portion 44A may be formed on the lower surface side of the flat plate-shaped base adjoining portion 42 by a U-shaped cross-sectional groove formed on the upper surface side. In this way, the thinned portion 44A is located at the eccentric position in the plate thickness direction, i.e., the Z-direction, with respect to a normal portion of the base adjoining portion 42 other than the thinned portion 44A. The neutral line of the thinned portion 44A in a bending work is eccentrically above or below the neutral line of the normal portion of the base adjoining portion 42 in the bending work. Even when the external force acts on the lead lower end portion 43b in a direction parallel to the long-side direction of the sealing member 12, i.e., the X-direction, the base adjoining portion 42 close to the lead portion 43 can be easily bent upward/downward, starting from the thinned portion 44A.

The smallest plate thickness t1 of the thinned portion 44A may be set about 30% to 50% of the plate thickness of the normal portion. In this case, it is easy to bend the base adjoining portion 42 upward/downward with respect to the base portion 41, starting from the thinned portion 44A. This can further reduce the warpage deformation amount of the sealing member 12 against the external force acting on the lead lower end portion 43b in the long-side direction of the sealing member 12, i.e., the X-direction. The thinned portion 44A may be formed by a V-shaped cross-sectional groove or a W-shaped cross-sectional groove.

The base adjoining portion 42a shown in FIG. 5A is placed separably in contact with the insulating member 3. Therefore, when the external force acts on the lead lower end portion 43b in the long-side direction of the sealing member 12, i.e., the X-direction, toward the battery outside (rightward in the figure), the thinned portion 44A stretches, or extends, absorbing the external force and reducing the warpage deformation amount of the sealing member 12. However, as compared with the case where the external force acts toward the battery inside (leftward in the figure), the warpage deformation amount of the sealing member 12 is less reduced.

In this regard, a base adjoining portion 42b in a modified example shown in FIG. 5B is formed at a lower level than the base portion 41, forming a downward step. This base adjoining portion 42b is separated from the insulating member 3 and thus can be easily bent upward/downward, starting from the thinned portion 44A, when the external force acts on the lead lower end portion 43b in the long-side direction of the sealing member 12, i.e., the X-direction, toward the battery outside (i.e., rightward in the figure), as in the case where the external force acts toward the battery inside (i.e., leftward in the figure). This can further reduce the warpage deformation amount of the sealing member 12 against the external force acting on the lead lower end portion 43b in the long-side direction of the sealing member 12, that is, the X-direction, corresponding to the direction toward the battery inside/outside.

The width w3 of the lead portion 43 in the long-side direction of the sealing member 12, or the X-direction, is set smaller than the width w1 of the base portion 41 in the short-side direction of the sealing member 12, or the Y-direction. Accordingly, when the lead portion 43 and the electrode body 2 are bonded together, the lead portion 43 is easily deformed, but this deformation of the lead portion 43 is prevented or reduced from being transmitted to the base portion 41 by the thinned portion 44A. Consequently, the width of the active-material uncoated part 211, 221 of the electrode body 2, to which the lead portion 43 is bonded by welding, can be reduced, and the battery capacity per unit volume can be improved.

Further, since the lead portion 43 extends downward by bending from an end (namely, a widthwise end) of the base adjoining portion 42 in the width direction toward the lower side of the case 1, a cutout 42c for the bending of the lead portion 43 is formed in the base adjoining portion 42. The width w2 of the thinned portion 44A in the short-side direction of the sealing member 12, i.e., the Y-direction, is set smaller than the width w1 of the base portion 41 in the short-side direction of the sealing member 12, or the Y-direction, just by the size of the cutout 42c. This allows the thinned portion 44A to be easily deformed, and further reduce the warpage deformation amount of the sealing member 12 against the external force acting on the lead lower end portion 43b in the long-side direction of the sealing member 12, i.e., the X-direction.

### Second Example

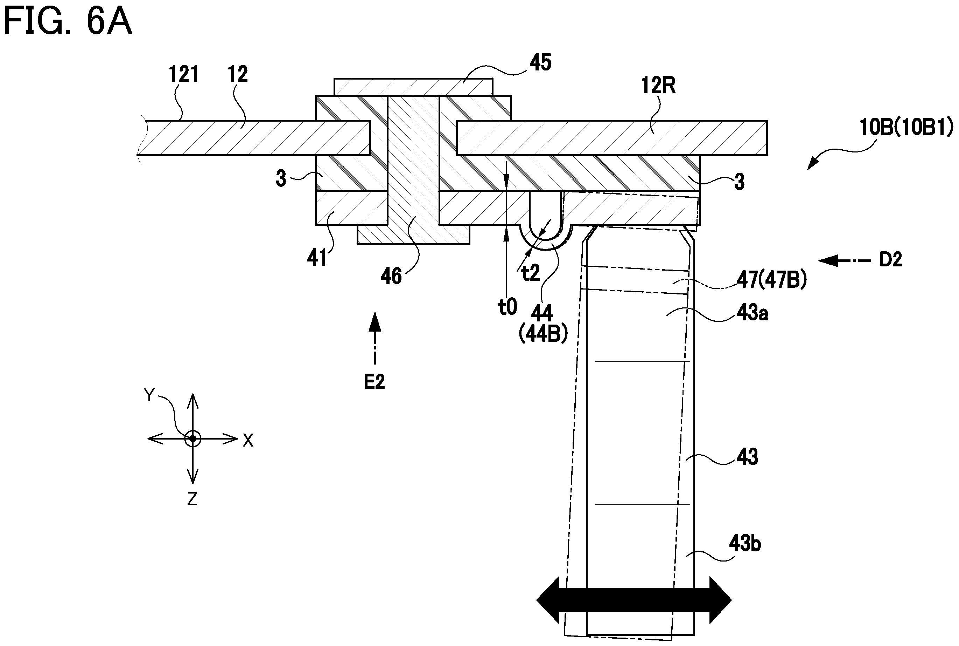

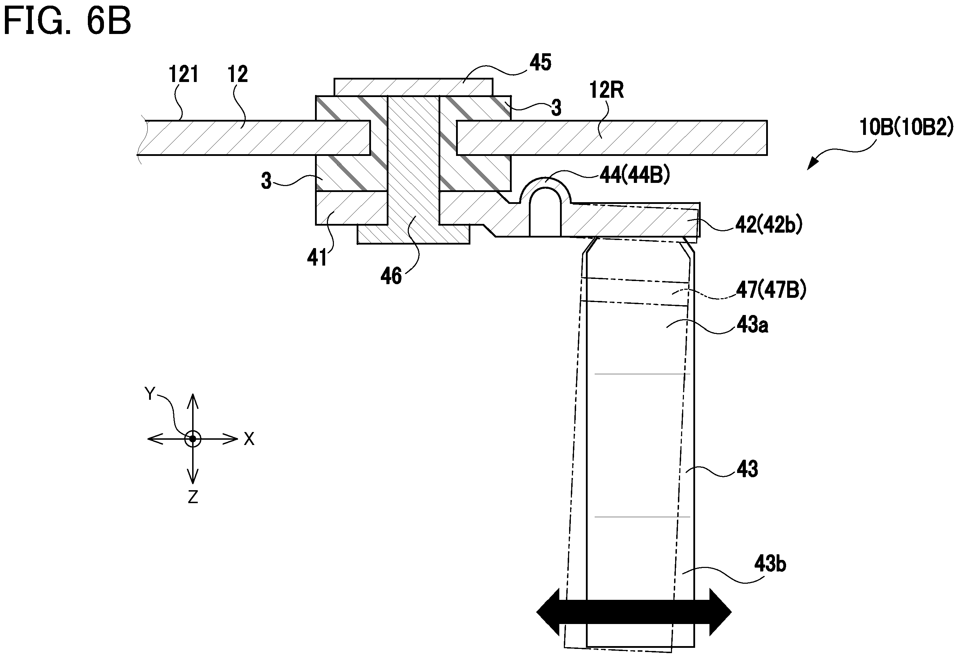

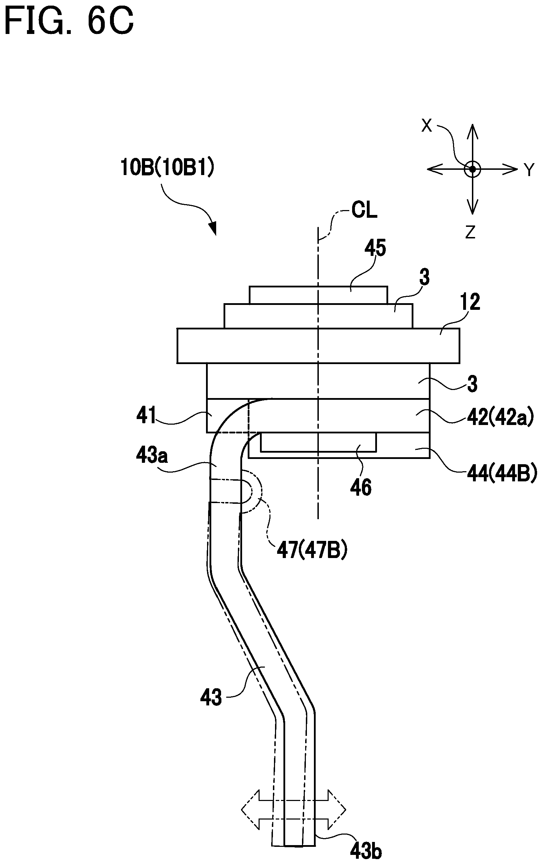

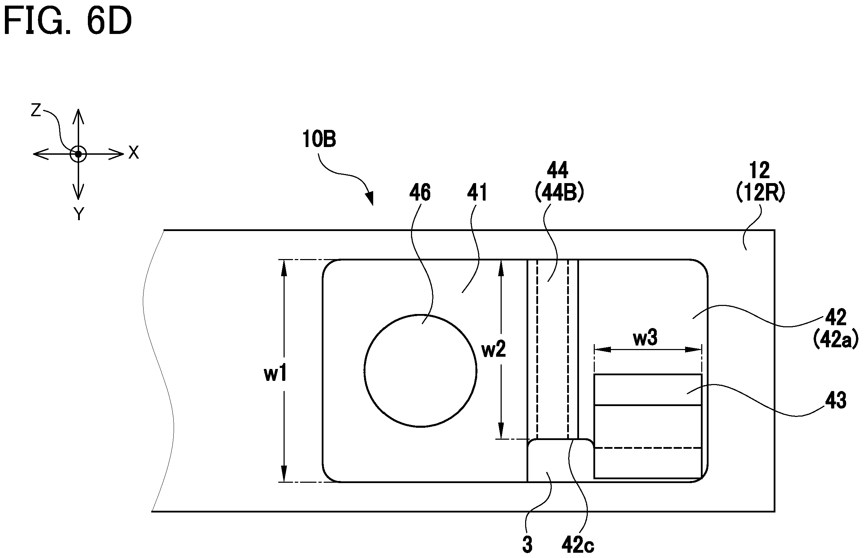

A second example of the secondary battery in the present embodiment of the disclosure will be described in detail below, referring to accompanying drawings. FIG. 6A is an enlarged cross-sectional view of a second example of the part B of the secondary battery in FIG. 1. FIG. 6B is an enlarged cross-sectional view of a modified example of FIG. 6A. FIG. 6C is a side view seen from an arrow D2 in FIG. 6A. FIG. 6D is a bottom view seen from an arrow E2 in FIG. 6A.

In a secondary battery 10B in the second example, the easily-deformable portion 44 is a curved portion 44B, as shown in FIG. 6A to FIG. 6D, formed in the base adjoining portion 42. This curved portion 44B extends with a predetermined cross-section in the short-side direction of the sealing member 12, i.e., the Y-direction. Specifically, the curved portion 44B shown in FIG. 6A has a circular-arc cross-section, protruding from one flat surface (i.e., a lower surface in this example) of the flat plate-shaped base adjoining portion 42 in an outward direction of the base adjoining portion 42 (i.e., a downward direction in this example). However, the configuration of the curved portion 44B is not limited thereto. As an alternative, the curved portion 44B may have a circular-arc cross-section, protruding from the top surface of the flat plate-shaped base adjoining portion 42 in an upward direction, as shown in FIG. 6B. In this case, the base adjoining portion 42b may be formed at a lower level than the base portion 41, forming a downward step.

As described above, the curved portion 44B is located at an eccentric position in the top-bottom direction, i.e., the Z-direction, relative to the normal portion of the base adjoining portion 42, Therefore, when the external force acts on the lead lower end portion 43b in a direction parallel to the long-side direction of the sealing member 12, i.e., the X-direction, the base adjoining portion 42 on the side close to the lead portion 43 can be easily bent upward/downward, starting from the curved portion 44B, even by a small force. Further, the curved portion 44B expands or contracts in the long-side direction (the X-direction), allowing the base adjoining portion 42 on the lead portion 43 side to be displaced in parallel to the long-side direction (the X-direction) even by a small force.

The smallest plate thickness t2 of the curved portion 44B may be about 30% to 50% of the plate thickness t0 of the normal portion of the base adjoining portion 42. This configuration allows the base adjoining portion 42 to easily expand and contract in the horizontal direction (the X-direction) or bent in the top-bottom direction (the Z-direction), starting from the curved portion 44B, with respect to the base portion 41. This can further reduce the warpage deformation amount of the sealing member 12 against the external force acting on the lead lower end portion 43b in the long-side direction of the sealing member 12, i.e., the X-direction. In another example, the curved portion 44B may be formed with a wavy shape with V-shaped cross-section or a W-shaped cross-section.

The width w3 of the lead portion 43 in the long-side direction of the sealing member 12, or the X-direction, is set smaller than the width w1 of the base portion 41 in the short-side direction of the sealing member 12, or the Y-direction. Accordingly, when the lead portion 43 and the electrode body 2 are bonded together, the lead portion 43 is easily deformed, but this deformation of the lead portion 43 is prevented or reduced from being transmitted to the base portion 41 by the curved portion 44B. Thus, the width of the active-material uncoated part 211, 221 of the electrode body 2, to which the lead portion 43 is bonded by welding, can be reduced, and the battery capacity per unit volume can be improved.

Further, since the lead portion 43 extends downward by bending from the widthwise end of the base adjoining portion 42 toward the lower side of the case 1, a cutout 42c for the bending of the lead portion 43 is formed in the base adjoining portion 42. The width w2 of the curved portion 44B in the short-side direction of the sealing member 12, i.e., the Y-direction, is set smaller than the width w1 of the base portion 41 in the short-side direction of the sealing member 12, or the Y-direction, just by the size of the cutout 42c. This allows the curved portion 44B to be easily deformed, and further reduce the warpage deformation amount of the sealing member 12 against the external force acting on the lead lower end portion 43b in the long-side direction of the sealing member 12, i.e., the X-direction.

### Third Example

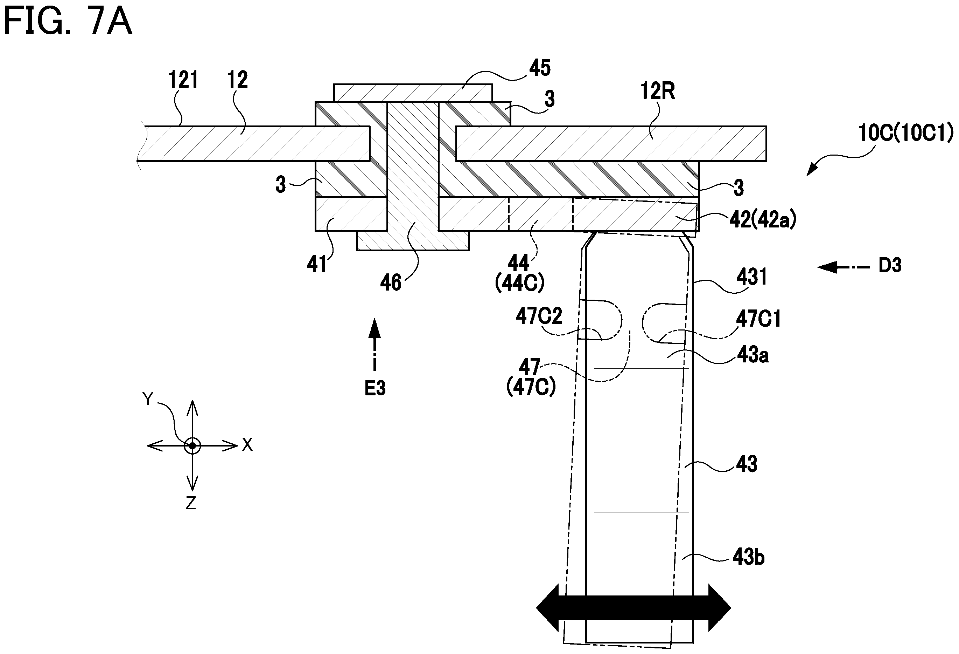

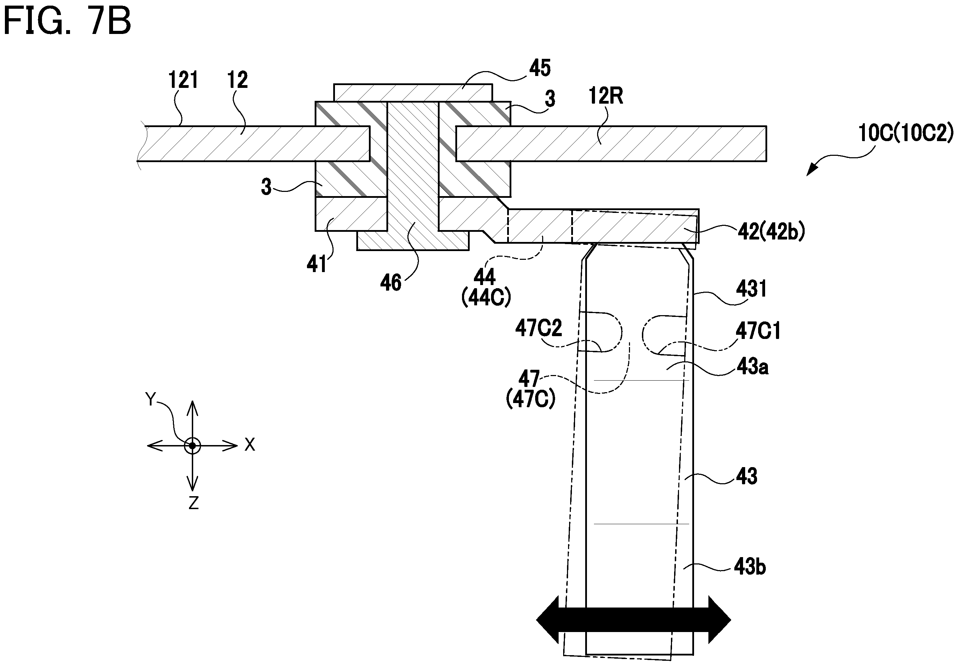

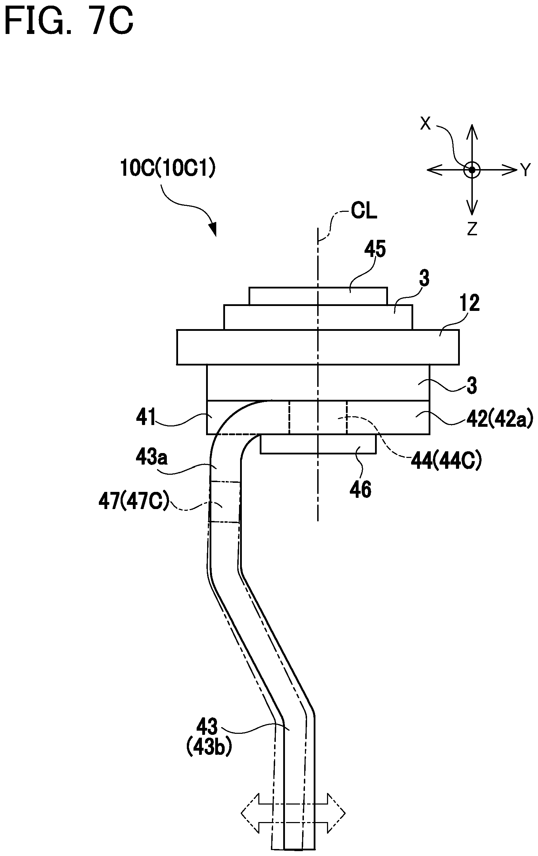

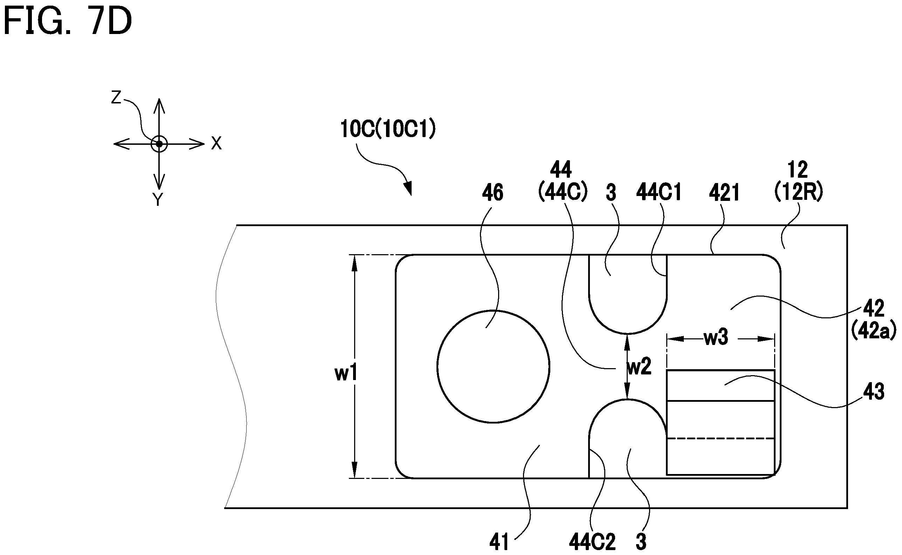

A third example of the secondary battery in the present embodiment of the disclosure will be described in detail below, referring to accompanying drawings. FIG. 7A is an enlarged cross-sectional view of a third example of the part B of the secondary battery in FIG. 1. FIG. 7B is an enlarged cross-sectional view of a modified example of FIG. 7A. FIG. 7C is a side view seen from an arrow D3 in FIG. 7A. FIG. 7D is a bottom view seen from an arrow E3 in FIG. 7A.

In a secondary battery 10C in the third example, the easily-deformable portion 44 is a reduced-width portion 44C, as shown in FIG. 7A to FIG. 7D, formed by cutouts in the base adjoining portion 42 in the short-side direction of the sealing member 12, i.e., the Y-direction from widthwise ends 421. This reduced-width portion 44C is formed in the central part of the flat plate-shaped base adjoining portion 42 in the width direction, i.e., the Y-direction, by U-shaped cutouts 44C1 and 44C2 cut from the widthwise ends 421 on both sides in the width direction. Since the lead portion 43 extends downward by bending from the widthwise end of the base adjoining portion 42, the cutout 44C2 forming the reduced-width portion 44C also serves as a cutout for the bending of the lead portion 43 in the base adjoining portion 42.

However, the reduced-width portion 44C is not limited to the above-mentioned shape. For example, the reduced-width portion 44C may be formed in only one of the widthwise ends 421 by forming the U-shaped cutout 44C1 cut into the flat plate-shaped base adjoining portion 42 from the other widthwise end 421. Since the reduced-width portion 44C is formed in the base adjoining portion 42 as above, when the external force acts on the lead lower end portion 43b in the long-side direction of the sealing member 12, that is, the X-direction, the base adjoining portion 42 on the lead portion 43 side can be bent in top-bottom direction (the Z-direction) or bent in the short-side direction of the sealing member 12, starting from the reduced-width portion 44C, even by a small force.

The smallest width w2 of the reduced-width portion 44C may be about 20% to 50% of the width w1 of the normal portion of the base portion 41. This configuration allows the base adjoining portion 42 on the lead portion 43 side to easily bend in the top-bottom direction (the Z-direction) or in the short-side direction of the sealing member 12 (the Y-direction) with respect to the base portion 41, starting from the reduced-width portion 44C. This can further reduce the warpage deformation amount of the sealing member 12 against the external force acting on the lead lower end portion 43b in the long-side direction of the sealing member 12, that is, the X-direction. In another example, the reduced-width portion 44C also may be formed by cutouts 44C1 and 44C2 each having a V-shaped cross-section, for example.

The base adjoining portion 42a shown in FIG. 7A is placed separably in contact with the insulating member 3. Therefore, when the external force acts on the lead lower end portion 43b in the long-side direction of the sealing member 12, i.e., the X-direction, toward the battery outside (rightward in the figure), the reduced-width portion 44C stretches, absorbing the external force and reducing the warpage deformation amount of the sealing member 12. However, as compared with the case where the external force acts toward the battery inside (leftward in the figure), the warpage deformation amount of the sealing member 12 is less reduced.

In this regard, a base adjoining portion 42b in a modified example shown in FIG. 7B is formed at a lower level than the base portion 41, forming a downward step. The reduced-width portion 44C corresponding to the easily-deformable portion 44 is formed in the base adjoining portion 42b located at a position separated from the insulating member 3. The base adjoining portion 42b can be easily bent upward/downward, i.e., in the Z-direction, starting from the reduced-width portion 44C, when the external force acts on the lead lower end portion 43b in the long-side direction of the sealing member 12, i.e., the X-direction, toward the battery outside (i.e., rightward in the figure), as in the case where the external force acts toward the battery inside (i.e., leftward in the figure). This can further reduce the warpage deformation amount of the sealing member 12 against the external force acting on the lead lower end portion 43b in the long-side direction of the sealing member 12, that is, the X-direction, corresponding to the direction toward the battery inside/outside.

The width w3 of the lead portion 43 in the long-side direction of the sealing member 12, or the X-direction, is set smaller than the width w1 of the base portion 41 in the short-side direction of the sealing member 12, or the Y-direction. Accordingly, when the lead portion 43 and the electrode body 2 are bonded together, the lead portion 43 is easily deformed, but this deformation of the lead portion 43 is prevented or reduced from being transmitted to the base portion 41 by the reduced-width portion 44C. Consequently, the width of the active-material uncoated part 211, 221 of the electrode body 2, to which the lead portion 43 is bonded by welding, can be reduced, and the battery capacity per unit volume can be improved.

### Example applications of First, Second, and Third Examples

Next, example applications of the foregoing first, second, and third examples of the secondary battery in the present embodiment of the disclosure will be described in detail, referring to FIG. 5A to FIG. 7D. The example applications of the foregoing secondary battery are shown as secondary batteries 10A1, 10A2, 10B1, 10B2, 10C1, and 10C2, each including a second easily-deformable portion 47 that is one of a thinned portion 47A, a curved portion 47B, each being formed in the lead upper end portion 43a, and extending in the long-side direction of the sealing member 12, i.e., the X-direction, with a predetermined cross-section, or a reduced-width portion 47C, which is formed in the lead upper end portion 43a cut in the long-side direction of the sealing member 12, i.e., the X-direction from widthwise ends 431.

In these examples, lead upper end portion 43a is provided with the second easily-deformable portion 47 corresponding to one of the thinned portion 47A or the curved portion 47B, each extending in the long-side direction of the sealing member 12 (the X-direction) with the predetermined cross-section, or the reduced-width portion 47C formed by cutouts in the lead upper end portion 43a in the long-side direction of the sealing member 12 (the X-direction) from the widthwise ends 431. Accordingly, when the external force acts on the lead lower end portion 43b of the collector terminal 4 in the short-side direction of the sealing member 12 (the Y-direction), the second easily-deformable portion 47 is bent, displacing the lead lower end portion 43b in the short-side direction of the sealing member 12 (the Y-direction), thus reducing inclination displacement of the base portion 41 in the short-side direction of the sealing member 12 (the Y-direction). Consequently, this configuration can reduce the inclination deformation as above in addition to the warpage deformation of the sealing member 12 and further improve the measurement accuracy of the temperature sensor 5.

In FIG. 5A to FIG. 7D, the second easily-deformable portion 47 is formed in the same type of shape as the easily-deformable portion 44 in each of the example applications, but is not limited thereto. The second easily-deformable portion 47 may be formed in different type of shape from the easily-deformable portion 44 in each example application. Thus, the second easily-deformable portion 47 may be designed appropriately according to the sizes, the constitution, and other conditions of the secondary batteries 10A1, 10A2, 10B1, 10B2, 10C1, or 10C2. Furthermore, the second easily-deformable portion 47 is formed between the base adjoining portion 42 and the upper end portion of the electrode body 2, providing a separation distance required for the bending moment of the lead lower end portion 43b with respect to the second easily-deformable portion 47. Thus, the second easily-deformable portion 47 can be easily deformed even by a small external force during weld bonding of the lead lower end portion 43b to the electrode body 2 and thus effectively absorb the external force. Further, the second easily-deformable portion 47 formed between the base adjoining portion 42 and the upper end portion of the electrode body 2 allows effective use of the available space in the case 1.

### Fourth Example

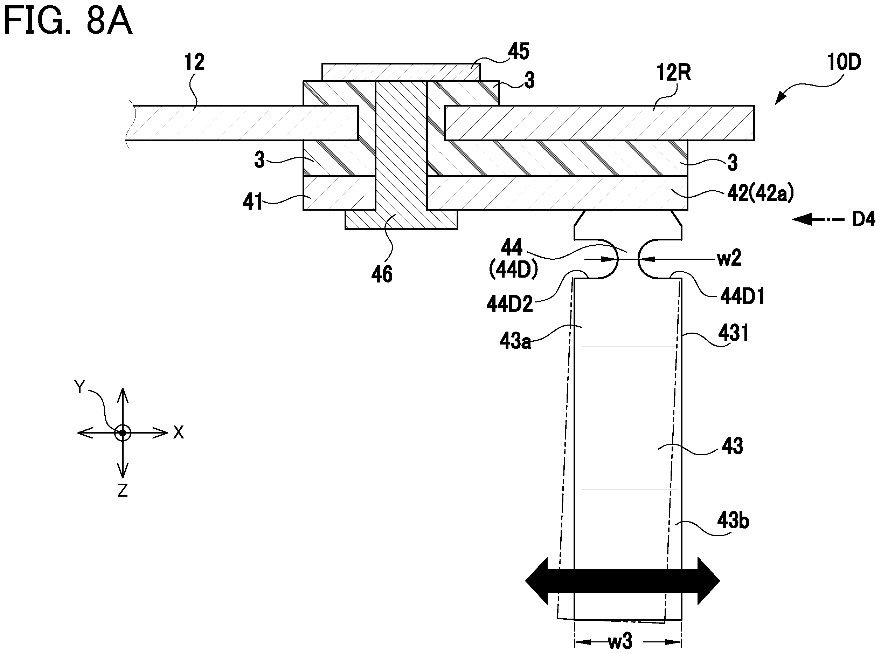

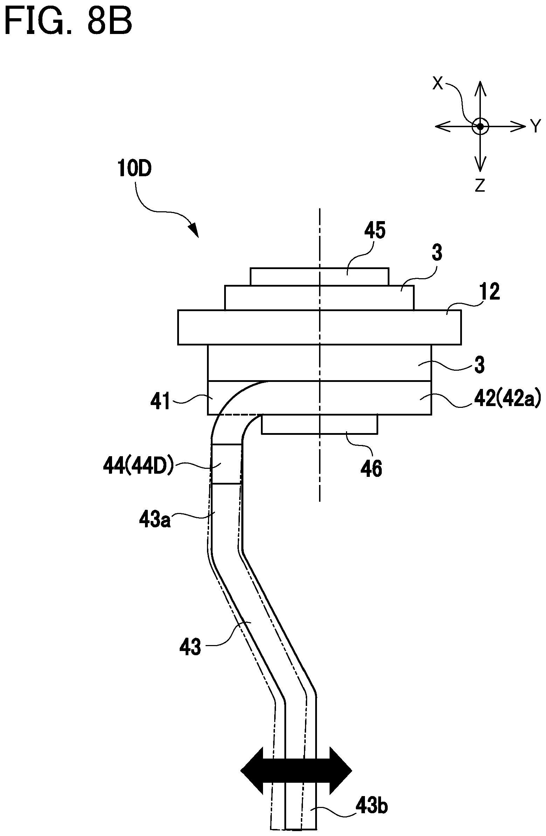

A fourth example of the secondary battery in the present embodiment of the disclosure will be described in detail below, referring to accompanying drawings. FIG. 8A is an enlarged cross-sectional view of a fourth example of the part B of the secondary battery in FIG. 1. FIG. 8B is a side view seen from an arrow D4 in FIG. 8A.

In a secondary battery 10D in the fourth example, the easily-deformable portion 44 is a reduced-width portion 44D formed by cutouts in the lead upper end portion 43a from widthwise ends 431 in the long-side direction of the sealing member 12 (the X-direction), as shown in FIG. 8A and FIG. 8B. This reduced-width portion 44D is formed in the central part of the flat plate-shaped lead portion 43 in the width direction by U-shaped cutouts 44D1 and 44D2 cut from the widthwise ends 431 on both sides in the width direction. However, the reduced-width portion 44D is not limited to the above shape. For example, the reduced-width portion 44D may be formed in only one of the widthwise ends 431 by forming the U-shaped cutout 44D1 cut into the flat plate-shaped lead portion 43 from the other widthwise end 431.

Since the reduced-width portion 44D is formed in the lead upper end portion 43a as above, when the external force acts on the lead lower end portion 43b in the long-side direction and the short-side direction of the sealing member 12, that is, the X-direction and the Y-direction, during weld bonding of the lead lower end portion 43b and the electrode body 2, the lead lower end portion 43b can be easily bent in the long-side direction (the X-direction) or the short-side direction (the Y-direction) of the sealing member 12, starting from the reduced-width portion 44D. Consequently, this configuration can reduce the inclination deformation in addition to the warpage deformation of the sealing member 12 and further improve the measurement accuracy of the temperature sensor 5.

The smallest width w2 of the reduced-width portion 44D may be about 20% to 50% of the width w3 of the normal portion of the lead portion 43. This configuration allows the lead lower end portion 43b to easily bend in the long-side direction (the X-direction) or the short-side direction (the Y-direction) of the sealing member 12 with respect to the base portion 41, starting from the reduced-width portion 44D. This can further reduce the warpage deformation and the inclination deformation of the sealing member 12 against the external force acting on the lead lower end portion 43b in the long-side direction (the X-direction) or the short-side direction (the Y-direction) of the sealing member 12. The reduced-width portion 44D also may be formed by cutouts 44D1 and 44D2 each having a V-shape, for example.

### Fifth Example

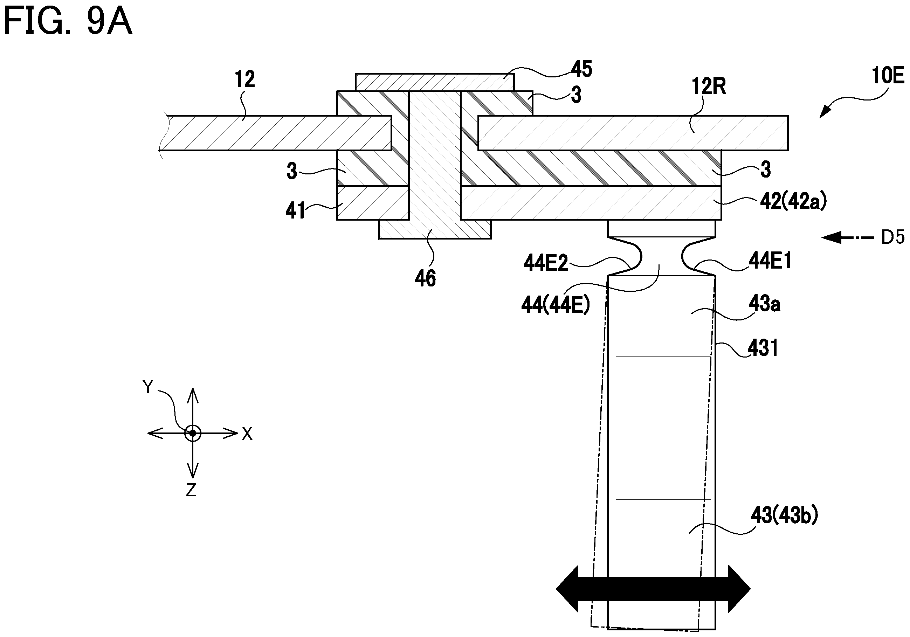

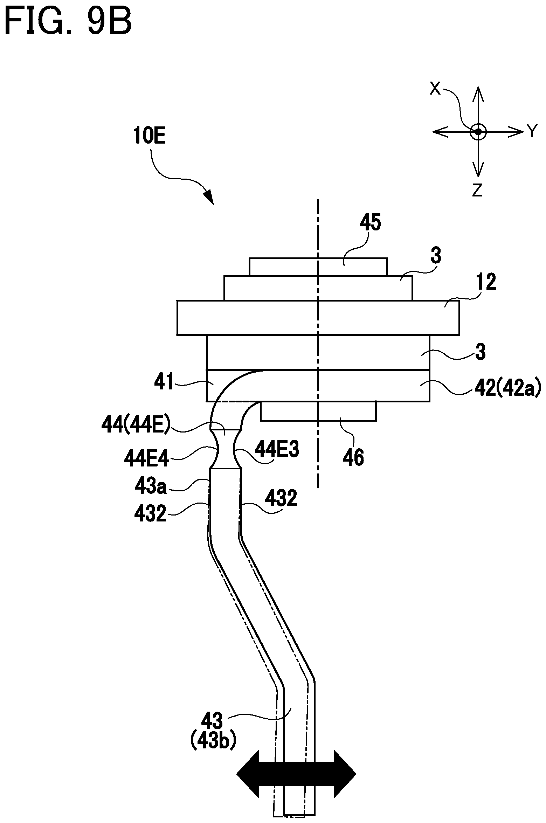

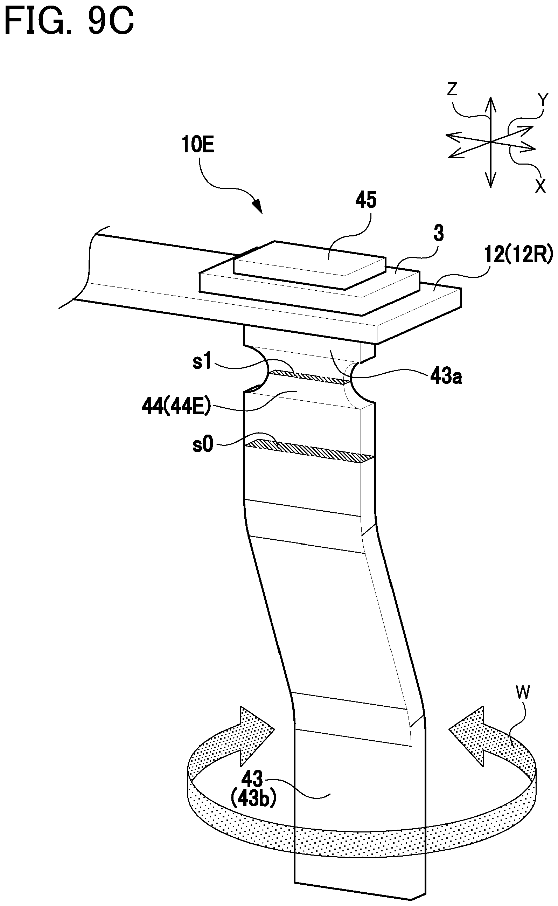

A fifth example of the secondary battery in the present embodiment of the disclosure will be described in detail below, referring to accompanying drawings. FIG. 9A is an enlarged cross-sectional view of a fifth example of the part B of the secondary battery in FIG. 1. FIG. 9B is a side view seen from an arrow D5 in FIG. 9A. FIG. 9C is an enlarged perspective view of the fifth example of the part B of the secondary battery in FIG. 1.

In a secondary battery 10E in the fifth example, the easily-deformable portion 44 is a constricted portion 44E formed by cutouts in the lead upper end portion 43a in the long-side direction (the X-direction) and the short-side direction (the Y-direction) of the sealing member 12, as shown in FIG. 9A to FIG. 9C. The constricted portion 44E is formed in the central part of the flat plate-shaped lead portion 43 in the width direction (the X-direction) and the plate thickness direction (the Y-direction) by U-shaped cutouts 44E1 and 44E2 cut from both widthwise ends 431 in the width direction and circular-arc shaped cutouts 44E3 and 44E4 cut from both ends 432 in the plate thickness direction. However, the constricted portion 44E is not limited to the above shape. For example, the constricted portion 44E may be formed by V-shaped cutouts, which are cut into the lead portion 43 from each widthwise end 431 and each plate-thickness direction end 432.

Since the constricted portion 44E is formed in the lead upper end portion 43a as above, when the external force, caused during weld bonding of the lead lower end portion 43b and the electrode body 2, acts on the lead lower end portion 43b in the long-side direction (the X-direction) and the short-side direction (the Y-direction) of the sealing member 12 or in the torsional direction (the W-direction) in which the lead lower end portion 43b rotates about the axis extending in the top-bottom direction (the Z-direction), the lead lower end portion 43b can be easily deformed in the long-side direction (the X-direction) of the sealing member 12, the short-side direction (the Y-direction) of the sealing member 12, or the torsional direction (the W-direction) of the lead portion 43, starting from the constricted portion 44E. Consequently, this configuration can reduce the inclination deformation and the torsional deformation in addition to the warpage deformation of the sealing member 12 and further improve the measurement accuracy of the temperature sensor 5.

The smallest cross-sectional area s1 of the constricted portion 44E may be about 20% to 50% of the normal cross-sectional area s0 of the normal portion of the lead portion 43. This configuration allows the lead lower end portion 43b to easily be deformed in the long-side direction (the X-direction), the short-side direction (the Y-direction) of the sealing member 12, or the torsional direction (the W-direction) with respect to the base portion 41, starting from the constricted portion 44E. This can further reduce the warpage deformation, the inclination deformation, and the torsional deformation of the sealing member 12 against the external force acting on the lead lower end portion 43b in the long-side direction (the X-direction), the short-side direction (the Y-direction) of the sealing member 12, or the torsional direction (the W-direction).

### Modified Examples

The foregoing embodiments are mere examples and give no limitation to the present disclosure. The present disclosure may be embodied in other specific forms without departing from the essential characteristics thereof. For instance, in the secondary battery 10 shown in FIG. 1, the base portion 41 of each of the collector terminals 4 is connected to the external connection part 45 located on the top surface side of the sealing member 12 with the swaged pin 46 or the like, for example. The insulating member 3 also serving as a seal material is interposed between the swaged pin 46 and the sealing member 12 and between the external connection part 45 and the sealing member 12. However, the insulating member 3 is not limited to the above configuration; for example, each collector terminal 4 and the sealing member 12 may be connected by insert molding with the insulating member 3. In this case, the base portion 41 of each collector terminal 4 is inserted in the insulating member 3 and the base adjoining portion 42 is separated from the insulating member 3. Therefore, each of the easily-deformable portions 44 variously configured in the first to fifth examples described above may be formed in the base adjoining portion 42 separated from the insulating member 3 or in the lead upper end portion 43a.

### Reference Signs List

- 1: Case
- 2: Electrode body
- 3: Insulating member
- 4: Current collector terminal
- 5: Temperature sensor
- 10, 10A, 10B, 10C: Secondary battery
- 10D, 10E, 10A1: Secondary battery
- 10A2, 10B1, 10B2: Secondary battery
- 10C1, 10C2: Secondary battery
- 11: Case body
- 12: Sealing member
- 12R: End portion in Long-side direction
- 12S: Sensor contact surface
- 21: Positive electrode body
- 22: Negative electrode body
- 23: Separator
- 41: Base portion
- 42: Base adjoining portion
- 43: Lead portion
- 43a: Lead upper end portion
- 43b: Lead lower end portion
- 44, 47: Easily-deformable portion
- 44A, 47A: Thinned portion
- 44B, 47B: Curved portion
- 44C, 44D, 47C: Reduced-width portion
- 44E: Constricted portion
- 111: Opening portion
- 121: Upper surface
- 421, 431: Widthwise end
- DJ: Battery temperature
- Q: Displacement amount

## Claims

1. A secondary battery (10, 10A, 10B,10C, 10D, 10E, 10A1, 10A2, 10B1, 10B2, 10C1, 10C2) comprising:
a case body (11) having an opening portion (111);
a sealing member (12) closing the opening portion (111) and having a longer length in a long-side direction (X) than a length in a short-side direction (Y) perpendicular to the long-side direction (X);
an electrode body (2) housed in the case body (11) and constituted of a positive electrode body (21) and a negative electrode body (22) stacked with a separator (23) interposed between them; and
a current collector terminal (4, 4A) for positive electrode and a current collector terminal (4, 4B) for negative electrode, each of the current collector terminals (4, 4A, 4B) including:
a base portion (41) joined to one of end portions (12R) of the sealing member (12) located at both ends in the long-side direction (X) via an insulating member (3);
a base adjoining portion (42) adjacently connected with the base portion (41) and located separately from the insulating member (3) or separably in contact with the insulating member (3); and
a lead portion (43) including a lead upper end portion (43a) connected with the base adjoining portion (42) and a lead lower end portion (43b) bonded to the electrode body (2),
wherein either the base adjoining portion (42) or the lead upper end portion (43a) is provided with an easily-deformable portion (44) formed to be deformable with respect to the base portion (41) without melting, to allow the lead lower end portion (43b) to be displaced in the long-side direction (X) of the sealing member (12).

2. The secondary battery (10, 10A, 10B,10C, 10D, 10E, 10A1, 10A2, 10B1, 10B2, 10C1, 10C2) according to claim 1, wherein
the sealing member (12) has a top surface (121) including a sensor contact surface (12S) with which a temperature sensor (5) can contact to monitor a temperature of the secondary battery, and
the easily-deformable portion (44) is formed to be deformed in the long-side direction (X) of the sealing member (12) so that a displacement amount (Q) of a central part of the sealing member (12) that is displaced in a top-bottom direction (Z) when external force acts on the lead lower end portion (43b) in the long-side direction (X) of the sealing member (12) falls within a predetermined reference value.

3. The secondary battery (10, 10A, 10A1, 10A2) according to claim 1, wherein the easily-deformable portion (44) is a thinned portion (44A) formed in the base adjoining portion (42) at an eccentric position in a plate thickness direction (Z) of the sealing member (12), the thinned portion (44A) extending in the short-side direction (Y) of the sealing member (12) with a predetermined cross-section.

4. The secondary battery (10, 10B, 10B1, 10B2) according to claim 1, wherein the easily-deformable portion (44) is a curved portion (44B) formed in the base adjoining portion (42) and extending in the short-side direction (Y) of the sealing member (12) with a predetermined cross-section.

5. The secondary battery (10, 10C, 10C2) according to claim 1, wherein the easily-deformable portion (44) is a reduced-width portion (44C) formed by a cutout in the base adjoining portion (42) in the short-side direction (Y) of the sealing member (12) from an end (421) in a width direction, the base adjoining portion (42) being located at a position separated from the insulating member (3).

6. The secondary battery (10, 10A1, 10A2, 10B1, 10B2, 10C1, 10C2) according to any one of claims 1 to 5, wherein the lead upper end portion (43a) is provided with a second easily-deformable portion (47) that is one of a thinned portion (47A), a curved portion (47B), each extending in the long-side direction (X) of the sealing member (12) with a predetermined cross-section, or a reduced-width portion (47C) formed by a cutout in the lead upper end portion (43a) in the long-side direction (X) of the sealing member (12) from an end (431) in a width direction.

7. The secondary battery (10, 10D) according to claim 1, wherein the easily-deformable portion (44) is a reduced-width portion (44D) formed in the lead upper end portion (43a) in the long-side direction (X) of the sealing member (12) from an end (431) in a width direction.

8. The secondary battery (10, 10E) according to claim 1, wherein the easily-deformable portion (44) is a constricted portion (44E) formed in the lead upper end portion (43a) in the long-side direction (X) and the short-side direction (Y) of the sealing member (12).
